# EUROPÄISCHE PATENTSCHRIFT

(11) **EP 4 163 176 B1**
(45) Veröffentlichungstag und Bekanntmachung des Hinweises auf die Patenterteilung: **03.12.2025**
(21) Anmeldenummer: 22196450.5
(22) Anmeldetag: 20.09.2022
(51) Int. Cl.: B60W 30/18, B60W 30/14

(54) **VERFAHREN ZUR FAHRERUNTERSTÜTZUNG IN EINEM FAHRZEUG**
METHOD FOR ASSISTING THE DRIVER IN A VEHICLE
PROCÉDÉ D'ASSISTANCE AU CONDUCTEUR DANS UN VÉHICULE

(30) Priorität: 11.10.2021 DE 102021211429
(43) Veröffentlichungstag der Anmeldung: 12.04.2023
(73) Patentinhaber: Robert Bosch GmbH, 70442 Stuttgart (DE)
(72) Erfinder: Vetter, Daniel, Farmington Hills, 483313418 (US); Schoenherr, Michael, 71272 Renningen-Malmsheim (DE)

(56) Entgegenhaltungen:
- DE-A1- 102010 004 625
- JP-A- 2004 114 906
- JP-A- 2020 121 575
- KR-A- 20190 007 663

## Beschreibung

Die Erfindung bezieht sich auf ein Verfahren zur Fahrerunterstützung in einem Einspurfahrzeug, das mit einem Fahrerassistenzsystem mit einer Beschleunigungsbegrenzungsfunktion ausgestattet ist.

### Stand der Technik

Bekannt sind Fahrerassistenzsysteme in Personenkraftwagen, die in der Ausführung als Abstandsregeltempomat selbsttätig die Fahrzeuggeschwindigkeit in Abhängigkeit des Abstandes zu einem vorausfahrenden Fahrzeug einstellen. Die Erfassung der Distanz zum vorausfahrenden Fahrzeug erfolgt üblicherweise mittels Radar, wobei gegebenenfalls auch Videoaufnahmen durchgeführt und ausgewertet werden können, um den Abstand zu bestimmen.

Darüber hinaus ist es bei Motorrädern bekannt, als Fahrerassistenzsystem einen Überholassistenten zu installieren, der bei einem beabsichtigten Spurwechsel oder beim Linksabbiegen vor einem gerade überholenden Fahrzeug warnt, das sich in gleicher Fahrtrichtung bewegt.

Stand der Technik sind JP 2020 121575A, DE 10 2010 004625 A1 und JP 2004 114906 A

### Offenbarung der Erfindung

Mithilfe des erfindungsgemäßen Verfahrens kann eine Fahrerunterstützung in einem Elnspurfahrzeug realisiert werden, das mit einer Beschleunigungsbegrenzungsfunktion ausgestattet ist. Bei aktiviertem Fahrerassistenzsystem hat die Beschleunigungsbegrenzungsfunktion zur Folge, dass eine selbsttätig ausgelöste oder eine vom Fahrer initiierte Beschleunigung des Fahrzeugs entweder nur mit einer vorgegebenen Maximalbeschleunigung möglich ist oder eine Beschleunigung vollständig unterbleibt, so dass die Fahrzeuggeschwindigkeit nicht erhöht werden kann. Derartige Beschleunigungsbegrenzungsfunktionen sind beispielsweise bei Abstandsregeltempomaten von Vorteil, um zum Beispiel bei Kurvenfahrten im Fall einer Nicht-Detektion des vorausfahrenden Fahrzeugs zu vermeiden, dass das eigene Fahrzeug plötzlich stark beschleunigt.

Bei aktiviertem Fahrerassistenzsystem wird im Fall eines gleichzeitig stattfindenden Überholvorgangs eine vom Fahrerassistenzsystem vorgegebene Beschleunigungsbegrenzung auf einen höheren Beschleunigungswert angehoben. Dementsprechend kann im Falle eines Überholvorgangs, der bei aktiviertem Fahrerassistenzsystem durchgeführt wird, das Fahrzeug auf eine höhere Beschleunigung gebracht werden als in Fahrzuständen, in denen kein Überholvorgang stattfindet. Der Überholvorgang wird entweder vom Fahrer durchgeführt oder selbsttätig über ein Fahrerassistenzsystem, welches ohne Fahrerbetätigung in das Lenksystem des Fahrzeugs eingreift.

Die Anhebung der Beschleunigungsbegrenzung im Fall eines Überholvorgangs hat den Vorteil, dass der Überholvorgang trotz des aktivierten Fahrerassistenzsystems mit erhöhter Beschleunigung durchgeführt werden kann. Dies ermöglicht es, den Überholvorgang in kurzer Zeit durchzuführen und entsprechend schnell zu beenden.

Vorteilhaft ist es außerdem, dass aufgrund der Erhöhung der Beschleunigungsbegrenzung die tatsächliche Fahrzeugbeschleunigung weitgehend oder vollständig dem Fahrerwunsch entsprechend umgesetzt wird. Der Überholvorgang wird in der vom Fahrer gewünschten und erwarteten Weise umgesetzt.

Der Überholvorgang wird vorzugsweise selbsttätig im Fahrzeug festgestellt, insbesondere mittels einer Fahrzeugsensorik. Hierbei können beispielsweise die Gaspedalbetätigung, die Lenkbetätigung und/oder der Abstand zum vorausfahrenden Fahrzeug berücksichtigt werden. Die Auswertung von Fahrzustandsgrößen und gegebenenfalls Umfeldgrößen ermöglicht es, selbsttätig auf einen aktuellen Überholvorgang zu schließen.

Es kommen verschiedene Fahrerassistenzsysteme mit Beschleunigungsbegrenzungsfunktion in Betracht. In bevorzugter Ausführung handelt es sich bei dem Fahrerassistenzsystem um eine Geschwindigkeitsregelung mit integrierter Abstandsregelung (Automatic Cruise Control - ACC). Bei der Geschwindigkeitsregelung wird eine vorgegebene Geschwindigkeit vom Fahrzeug selbsttätig eingehalten, wobei die integrierte Abstandsregelung einen geschwindigkeitsabhängigen Abstand zum vorausfahrenden Fahrzeug selbsttätig einhält und das Fahrzeug selbsttätig beschleunigt und abgebremst wird.

Das Fahrerassistenzsystem mit Beschleunigungsbegrenzungsfunktion kann gegebenenfalls mit einem weiteren Fahrerassistenzsystem kombiniert werden, mit dem der Überholvorgang durchgeführt oder zumindest assistiert wird. Bei diesem weiteren Fahrerassistenzsystem handelt es sich beispielsweise um einen Überholassistenzen, der vor einem beabsichtigten Spurwechsel oder Linksabbiegen vor einem überholenden Fahrzeug in gleicher Fahrtrichtung warnt.

Der Überholassistent nutzt eine Fahrzeugsensorik, insbesondere eine Umfeldsensorik, beispielsweise Radar oder Video, um überholende Fahrzeuge rechtzeitig zu detektieren.

Der Überholassistenz kann entweder permanent im Fahrzeug aktiviert sein oder wird mit dem Erkennen eines Überholvorgangs aktiviert.

Grundsätzlich möglich ist es aber auch, dass der Überholvorgang vollständig eigenständig von dem Fahrer ohne Überholassistent durchgeführt wird.

Die Anhebung der Beschleunigungsbegrenzung kann an eine oder mehrere Zustandsgrößen im Fahrzeug gekoppelt sein. Es kann beispielsweise zweckmäßig sein, die Anhebung der Beschleunigungsbegrenzung nur durchzuführen, wenn die Gierrate des Fahrzeugs einen Gierratengrenzwert übersteigt. Hiermit ist sichergestellt, dass ein Überholvorgang ohne oder mit reduzierter Beschleunigungsbegrenzung durchgeführt wird, auch wenn die Einleitung des Überholvorgangs bei einem verhältnismäßig geringen Abstand zum vorausfahrenden Fahrzeug erfolgt und sich eine entsprechend erhöhte Gierrate im Fahrzeug einstellt. Auch in diesen Fällen kann der Überholvorgang aufgrund der Reduzierung und Aufhebung der Beschleunigungsbegrenzung mit der gewünschten Geschwindigkeit und Beschleunigung durchgeführt werden. Zugleich bleibt die Beschleunigungsbegrenzung für alle weiteren Fahrsituationen bestehen.

Gemäß einer weiteren vorteilhaften Ausführung, die sich auf ein Einspurfahrzeug bezieht, wird die Anhebung der Beschleunigungsbegrenzung nur durchgeführt, wenn die Schräglage des Einspurfahrzeugs einen Schräglagengrenzwert übersteigt. Auch in diesem Fall, der beispielsweise wie bei der Gierrate bei einem Überholvorgang mit relativ geringer Distanz zum vorausfahrenden Fahrzeug eintritt, soll der gewünschte Überholvorgang mit der beabsichtigten Geschwindigkeit und Beschleunigung durchgeführt werden, ohne dass eine Limitierung des Fahrerwunsches erfolgt.

Erfindungsgemäß hängt die Höhe, auf die die Beschleunigungsbegrenzung im Fall eines Überholvorgangs gesetzt wird, von einer oder mehreren Fahrzustandsgrößen ab, und zwar von der Schräglage und/oder der Gierrate. Die Beschleunigungsbegrenzung wird auf einen zustandsgrö-ßenabhängigen Wert festgesetzt. Gegebenenfalls ist es auch möglich, die Beschleunigungsbegrenzung auf einen vorab definierten, festgelegten Wert anzuheben, ungeachtet der aktuellen Fahrzustandsgrößen; in diesem Fall dient lediglich das Erkennen eines Überholvorgangs als Grundlage für die Anhebung der Beschleunigungsbegrenzung.

Mit Beendigung des Überholvorgangs kann der Beschleunigungsgrenzwert wieder auf den ursprünglichen Wert gesetzt werden.

Erfindungsgemäß findet das Verfahren Anwendung bei Einspurfahrzeugen, insbesondere bei motorisierten Zweirädern wie Motorrädern oder Motorrollern.

Die Verfahrensschritte des Verfahrens laufen in einem Steuergerät in einem Fahrzeug ab, mit dem einstellbare Komponenten eines Fahrerassistenzsystems im Fahrzeug ansteuerbar sind. Es kann gegebenenfalls zweckmäßig sein, dass verschiedene Verfahrensschritte auf unterschiedlichen Steuergeräten im Fahrzeug ablaufen, wobei die Steuergeräte zum Datenaustausch miteinander kommunizieren. Bei den einstellbaren Komponenten handelt es sich um Komponenten eines Antriebsmotors im Fahrzeug sowie gegebenenfalls eines Bremssystems im Fahrzeug. Darüber hinaus kommen auch weitere Systeme im Fahrzeug in Betracht, insbesondere das Lenksystem.

Die Erfindung bezieht sich des Weiteren auf ein Fahrzeug, das mit einem entsprechenden Steuergerät oder mehreren Steuergeräten und mit mindestens einem Fahrerassistenzsystem ausgestattet ist, welches eine Beschleunigungsbegrenzungsfunktion aufweist. Bei dem Fahrzeug handelt es sich erfindungsgemäß um ein Einspurfahrzeug.

Die Erfindung bezieht sich außerdem auf ein Computerprogrammprodukt mit einem Programmcode, der dazu ausgelegt ist, die vorbeschriebenen Verfahrensschritte auszuführen. Das Computerprogrammprodukt läuft in einem vorbeschriebenen Steuergerät ab bzw. gegebenenfalls in mehreren Steuergeräten.

Weitere Vorteile und zweckmäßige Ausführungen sind den weiteren Ansprüchen, der Figurenbeschreibung und den Zeichnungen zu entnehmen. Es zeigen:
- Fig. 1: eine Draufsicht auf ein Motorrad, das einen Überholvorgang zum Überholen eines vorausfahrenden Kraftfahrzeugs beginnt,
- Fig. 2: ein Ablaufdiagramm mit Verfahrensschritten zur Anhebung einer Beschleunigungsbegrenzung in einem Fahrerassistenzsystem des Motorrads.

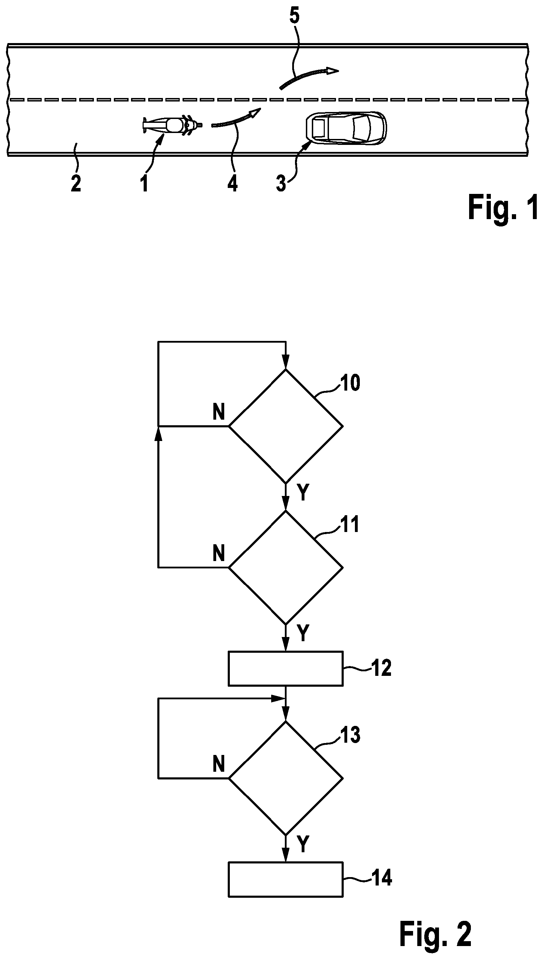

In Fig. 1 ist eine Draufsicht auf ein Einspurfahrzeug 1 dargestellt, das als Motorrad ausgeführt ist und sich auf einer Straße 2 bewegt. Das Motorrad 1 folgt einem vorausfahrenden Kraftfahrzeug 3. Mit den Bezugszeichen 4 und 5 ist eine Fahrlinie des Motorrades 1 für einen beabsichtigten Überholvorgang dargestellt.

Das Motorrad 1 ist mit einer Sensorik ausgestattet, über die Fahrzustandsgrößen wie Geschwindigkeit, Beschleunigung und die Gierrate erfasst werden. Auch die Schräglage des Motorrades 1 kann auf der Grundlage sensorisch erfasster Zustandsgrößen ermittelt werden. Gegebenenfalls kommt auch eine Ermittlung des aktuellen Lenkwinkels im Motorrad 1 in Betracht.

Das Motorrad 1 ist mit verschiedenen Fahrerassistenzsystemen ausgestattet, zu denen eine Geschwindigkeitsregelung mit integrierter Abstandsregelung (Automatic Cruise Control - ACC) und ein Überholassistent gehört, der vor einem beabsichtigten Spurwechsel oder einem Linksabbiegen vor einem überholenden Fahrzeug in gleicher Fahrtrichtung warnt. Das Motorrad 1 ist außerdem mit einer Umfeldsensorik ausgestattet, insbesondere einem Radarsystem, gegebenenfalls auch einem videobasierten System, das es erlaubt, vorausfahrende Fahrzeuge sowie überholende Fahrzeuge zu erfassen. Es ist insbesondere möglich, den Abstand zu den Fahrzeugen im Umfeld des Motorrades 1 zu erfassen sowie die Geschwindigkeit dieser Fahrzeuge zu ermitteln.

Das Motorrad 1 ist des Weiteren mit einem oder mehreren Steuergeräten versehen, über die Teil- oder Subsysteme im Fahrzeug ansteuerbar sind, insbesondere das Bremssystem und der Antriebsmotor. Hierbei können aktuelle Fahrzustandsgrößen sowie Umfeldgrößen, die aus der Sensorik gewonnen werden, berücksichtigt werden.

Die Geschwindigkeitsregelung mit integrierter Abstandsregelung ACC ermöglicht es dem Motorrad, dem vorausfahrenden Kraftfahrzeug 3 ohne Brems- oder Antriebseingriff durch den Fahrer selbsttätig zu folgen, so dass der Fahrer lediglich Lenkbewegungen ausführen muss. Der Abstand zwischen dem Motorrad 1 und dem vorausfahrenden Fahrzeug 3 hängt zum einen von Einstellungen des Fahrers auf dem Motorrad 1 und zum andern von der aktuellen Geschwindigkeit des Motorrades 1 und der Relativgeschwindigkeit zwischen Motorrad 1 und Kraftfahrzeug 3 ab. Bei höheren Geschwindigkeiten des Motorrades 1 stellt das ACC einen größeren Abstand zum vorausfahrenden Kraftfahrzeug 3 ein als bei niedrigeren Geschwindigkeiten.

In der Geschwindigkeitsregelung mit integrierter Abstandsregelung ACC, die vorzugsweise im Bremssteuergerät im Motorrad 1 realisiert ist, ist eine Beschleunigungsbegrenzungsfunktion enthalten, welche die Beschleunigung des Motorrades 1 bei aktivierter Geschwindigkeitsregelung auf einen definierten Wert begrenzt. Diese Beschleunigungsbegrenzung hat die Funktion, dass für den Fall, dass das vorausfahrende Fahrzeug von der Umfeldsensorik nicht mehr erfasst wird, beispielsweise in scharfen Kurven, das Motorrad 1 nur mit einer definierten Maximalbeschleunigung beschleunigen kann, und zwar entweder vom Fahrer initiiert oder selbsttätig über die Geschwindigkeitsregelung.

Fig. 2 zeigt ein Ablaufdiagramm zur Einstellung der aktuellen Beschleunigungsbegrenzung bei aktivierter Geschwindigkeitsregelung bei einem Überholvorgang. Zunächst wird in einem ersten Verfahrensschritt 10 abgefragt, ob die Geschwindigkeitsregelung mit integrierter Abstandsregelung aktiviert ist. Ist dies nicht der Fall, wird der Nein-Verzweigung ("N") folgend wieder zum Beginn des Verfahrensschrittes 10 zurückgekehrt, der danach in regelmäßigen Abständen erneut durchlaufen wird. Ergibt dagegen die Abfrage im Schritt 10, dass die Geschwindigkeitsregelung aktiviert ist, wird der Ja-Verzweigung ("Y") folgend zum nächsten Verfolgungsschritt 11 vorgerückt.

Im Verfahrensschritt 11 erfolgt eine weitere Abfrage, ob ein Überholvorgang eingeleitet worden ist. Dies kann anhand von Fahrzustandsgrößen im Fahrzeug, die über die Fahrzeugsensorik ermittelt werden, entschieden werden. Es kann beispielsweise anhand des aktuellen Lenkwinkels oder der Gierrate oder der Schräglage des Motorrades 1 über das Vorliegen eines Überholvorgangs entschieden werden, wobei entweder nur eine der Zustandsgrößen oder eine Kombination der Zustandsgrößen abgefragt werden können. Ergibt die Abfrage im Schritt 11, dass kein Überholvorgang vorliegt, wird der Nein-Verzweigung folgend wieder zum Beginn des Verfahrens im Schritt 10 zurückgekehrt.

Ergibt dagegen die Abfrage im Schritt 11, dass tatsächlich ein Überholvorgang eingeleitet wurde, wird der Ja-Verzweigung folgend zum nächsten Schritt 12 vorgerückt, in welchem die Beschleunigungsbegrenzung, welche in der Geschwindigkeitsregelung eingestellt ist, entweder auf einen höheren Beschleunigungswert angehoben oder vollständig aufgehoben wird. Die Entscheidung, ob angehoben oder aufgehoben wird, kann entweder voreingestellt sein oder von Zustandsgrößen des Fahrzeugs sowie Umgebungsgrößen abhängig gemacht werden. In jedem Fall erfolgt eine Änderung der Beschleunigungsbegrenzung dahingehend, dass für die Durchführung des Überholvorgangs ein höherer Beschleunigungswert zugelassen wird. Der Wert des höheren Beschleunigungswerts kann ebenfalls von Fahrzustands- und/oder Umgebungsgrößen abhängig sein. Diese Vorgehensweise ermöglicht es, dass der Motorradfahrer in einer gewohnten Weise mit Beschleunigung seines Motorrades den Überholgang durchführen kann.

Im folgenden Schritt 13 erfolgt die Abfrage, ob der Überholvorgang beendet ist, was ebenfalls anhand von Zustandsgrößen und Umfeldgrößen entschieden werden kann. Hierbei werden insbesondere die gleichen Größen berücksichtigt, die auch für die Entscheidung herangezogen werden, ob ein Überholvorgang durchgeführt werden soll. Ergibt die Abfrage im Schritt 13, dass der Überholvorgang noch nicht beendet ist, wird der Nein-Verzweigung folgend wieder zum Beginn des Schrittes 13 zurückgekehrt und die Abfrage in zyklischen Abständen erneut durchgeführt. Ergibt dagegen die Abfrage im Schritt 13, dass der Überholvorgang beendet ist, wird der Ja-Verzweigung folgend zum nächsten Schritt 14 vorgerückt, in welchem die Beschleunigungsbegrenzung wieder auf den ursprünglichen Wert gesetzt wird, der in der Geschwindigkeitsregelung eingestellt ist. Damit ist das Verfahren beendet.

Es kann gegebenenfalls vorteilhaft sein, dass die Anhebung oder Aufhebung der Beschleunigungsbegrenzung im Verfahrensschritt 12 von weiteren Bedingungen abhängig gemacht wird, beispielsweise von der Gierrate des Fahrzeugs oder der Schräglage des Fahrzeugs. Nur wenn die Gierrate und/oder die Schräglage einen zugeordneten Grenzwert übersteigt, erfolgt die Anhebung bzw. Aufhebung der Beschleunigungsbegrenzung im Schritt 12. Hiermit wird der Tatsache Rechnung getragen, dass insbesondere der sportliche Motorradfahrer Überholmanöver mit höherer Gierrate bzw. Schräglage durchführen als vorsichtige oder unerfahrene Fahrer.

## Patentansprüche

1. Verfahren zur Fahrerunterstützung in einem als Einspurfahrzeug ausgebildeten Fahrzeug mit einem Fahrerassistenzsystem mit Beschleunigungsbegrenzungsfunktion, wobei bei aktiviertem Fahrerassistenzsystem im Fall eines gleichzeitig stattfindenden Überholvorgangs eine vom Fahrerassistenzsystem vorgegebene Beschleunigungsbegrenzung auf einen höheren Beschleunigungswert angehoben wird, **dadurch gekennzeichnet, dass** die Höhe, auf die die Beschleunigungsbegrenzung im Fall eines Überhohlvorgangs gesetzt wird, von einer oder mehreren Fahrzustandsgrößen, und zwar von einer Schräglage und/oder einer Gierrate des Fahrzeugs, abhängt..

2. Verfahren nach Anspruch 1, **dadurch gekennzeichnet, dass** das Fahrerassistenzsystem mit Beschleunigungsbegrenzungsfunktion eine Geschwindigkeitsregelung mit integrierter Abstandsregelung (ACC) ist.

3. Verfahren nach Anspruch 1 oder 2, **dadurch gekennzeichnet, dass** während eines Lenkvorgangs ein Überholassistent aktiviert ist, der vor einem beabsichtigten Spurwechsel oder Linksabbiegen vor einem überholenden Fahrzeug in gleicher Fahrtrichtung warnt.

4. Verfahren nach einem der Ansprüche 1 bis 3, **dadurch gekennzeichnet, dass** die Anhebung der Beschleunigungsbegrenzung nur durchgeführt wird, wenn die Gierrate des Fahrzeugs einen Gierratengrenzwert übersteigt.

5. Verfahren nach einem der Ansprüche 1 bis 4, **dadurch gekennzeichnet, dass** bei einem Einspurfahrzeug die Anhebung der Beschleunigungsbegrenzung nur durchgeführt wird, wenn die Schräglage des Einspurfahrzeugs einen Schräglagengrenzwert übersteigt.

6. Verfahren nach einem der Ansprüche 1 bis 5, **dadurch gekennzeichnet, dass** die Anhebung der Beschleunigungsbegrenzung als Funktion einer oder mehrerer aktueller Fahrzustandsgrößen durchgeführt wird.

7. Steuergerät zur Ansteuerung der einstellbaren Komponenten eines Fahrerassistenzsystems zur Durchführung des Verfahrens nach einem der Ansprüche 1 bis 6.

8. Einspurfahrzeug mit einem Steuergerät nach Anspruch 7 und mit einem Fahrerassistenzsystem mit Beschleunigungsbegrenzungsfunktion.

9. Computerprogrammprodukt mit einem Programmcode, der dazu ausgelegt ist, Schritte des Verfahrens nach einem der Ansprüche 1 bis 6 auszuführen, wenn das Computerprogrammprodukt in einem Steuergerät gemäß Anspruch 7 abläuft.

## Claims

1. Method for driver assistance in a vehicle, which is in the form of a single-track vehicle, having a driver assistance system with an acceleration limiting function, wherein, when the driver assistance system is activated, a simultaneously occurring overtaking manoeuvre results in an acceleration limit specified by the driver assistance system being raised to a higher acceleration value, **characterized in that** the level to which the acceleration limit is set in the event of an overtaking manoeuvre depends on one or more driving condition variables, specifically an inclination and/or a yaw rate of the vehicle.

2. Method according to Claim 1, **characterized in that** the driver assistance system with an acceleration limiting function is a speed controller with integrated distance control (ACC).

3. Method according to Claim 1 or 2, **characterized in that** during a steering manoeuvre an overtaking assist system is activated that warns against an intended lane change or left turn in front of an overtaking vehicle in the same direction of travel.

4. Method according to one of Claims 1 to 3, **characterized in that** the acceleration limit is raised only if the yaw rate of the vehicle exceeds a yaw rate limit value.

5. Method according to one of Claims 1 to 4, **characterized in that** in the case of a single-track vehicle the acceleration limit is raised only if the inclination of the single-track vehicle exceeds an inclination limit value.

6. Method according to one of Claims 1 to 5, **characterized in that** the acceleration limit is raised as a function of one or more current driving condition variables.

7. Control unit for controlling the adjustable components of a driver assistance system for carrying out the method according to one of Claims 1 to 6.

8. Single-track vehicle having a control unit according to Claim 7 and having a driver assistance system with an acceleration limiting function.

9. Computer program product comprising program code designed to perform steps of the method according to one of Claims 1 to 6 when the computer program product runs in a control unit according to Claim 7.

## Revendications

1. Procédé d'assistance au conducteur dans un véhicule réalisé sous la forme d'un véhicule à voie unique comprenant d'un système d'assistance à la conduite avec fonction de limitation de l'accélération, une limitation de l'accélération prédéfinie par le système d'assistance à la conduite étant, lorsque le système d'assistance à la conduite est activé dans le cas d'une manœuvre de dépassement simultanée, augmentée à une valeur d'accélération plus élevée, **caractérisé en ce que** le niveau auquel la limitation de l'accélération est fixée dans le cas d'une manœuvre de dépassement dépend d'une ou plusieurs grandeurs d'état de conduite, à savoir d'une inclinaison et/ou d'un taux de lacet du véhicule.

2. Procédé selon la revendication 1, **caractérisé en ce que** le système d'assistance à la conduite avec fonction de limitation de l'accélération est un régulateur de vitesse avec régulation de distance intégrée (ACC).

3. Procédé selon la revendication 1 ou 2, **caractérisé en ce que**, pendant une manœuvre de changement de direction, un assistant de dépassement est activé, lequel avertit avant un changement de voie prévu ou un virage à gauche devant un véhicule qui dépasse dans le même sens de circulation.

4. Procédé selon l'une des revendications 1 à 3, **caractérisé en ce que** l'augmentation de la limitation de l'accélération n'est effectuée que lorsque le taux de lacet du véhicule dépasse une valeur limite de taux de lacet.

5. Procédé selon l'une des revendications 1 à 4, **caractérisé en ce que**, dans le cas d'un véhicule à voie unique, l'augmentation de la limitation de l'accélération n'est effectuée que lorsque l'inclinaison du véhicule à voie unique dépasse une valeur limite d'inclinaison.

6. Procédé selon l'une des revendications 1 à 5, **caractérisé en ce que** l'augmentation de la limitation de l'accélération est effectuée en fonction d'une ou plusieurs grandeurs d'état de conduite actuelles.

7. Dispositif de commande destiné à commander les composants réglables d'un système d'assistance à la conduite afin de mettre en œuvre le procédé selon l'une des revendications 1 à 6.

8. Véhicule à voie unique comprenant un dispositif de commande selon la revendication 7 et comprenant un système d'assistance à la conduite avec fonction de limitation de l'accélération.

9. Produit programme informatique comprenant un code de programme qui est conçu pour exécuter des étapes du procédé selon l'une des revendications 1 à 6 lorsque le produit programme informatique est exécuté sur un dispositif de commande selon la revendication 7.
